Europäisches Patentamt

European Patent Office

Office européen des brevets

(19)

(11) Veröffentlichungsnummer: **0 193 943**
**B1**

(12) **EUROPÄISCHE PATENTSCHRIFT**

(45) Veröffentlichungstag der Patentschrift:
21.06.89

(21) Anmeldenummer: 86102899.1

(22) Anmeldetag: 05.03.86

(51) Int. Cl.⁴: **G11B 20/10, G11B 20/14**

(54) Schaltungsanordnung zur Störbefreiung von Binären Datensignalen in einem digitalen Übertragungssystem.

(30) Priorität: 07.03.85 DE 3508136

(43) Veröffentlichungstag der Anmeldung:
10.09.86 Patentblatt 86/37

(45) Bekanntmachung des Hinweises auf die Patenterteilung:
21.06.89 Patentblatt 89/25

(84) Benannte Vertragsstaaten:
AT CH DE FR GB IT LI NL SE

(73) Patentinhaber: Siemens Aktiengesellschaft Berlin und München, Wittelsbacherplatz 2, D-8000 München 2(DE)

(72) Erfinder: Fischer, Helmut, Dipl.-Ing., Oertlinweg 6, D-8000 München 90(DE)

(56) Entgegenhaltungen:
EP-A- 0 027 547
DE-A- 2 549 966
JP-A-34 007 852
US-A- 4 137 504

ELECTRONIC ENGINEERING, Band 54, Nr. 669, September 1982, Seite 24, London, GB; D.T. HOURIGAN et al.: "Deglitch circuit for self-clocking codes"
PATENTS ABSTRACTS OF JAPAN, Band 6, Nr. 22 (P-101) [900], 9. Februar 1982, Seite 17 P 101; & JP - A - 56 143 018 (HITACHI SEISAKUSHO K.K.) 07.11.1981
IBM TECHNICAL DISCLOSURE BULLETIN, Band 20, Nr. 2, Juli 1977, Seiten 518-520, New York, US; O.R. LUHRS et al.: "Adaptive equalization for digital recorder readback circuits"
IBM TECHNICAL DISCLOSURE BULLETIN, Band 15,

(56) Entgegenhaltungen: (Fortsetzung)
Nr. 2, Juli 1972, Seiten 643-645, New York, US; D.J. ERNISSE et al.: "Multiplexing amplitude pointer with digital data to enhance error correction"

EP 0 193 943 B1

## Beschreibung

Die Erfindung bezieht sich auf eine Schaltungsanordnung zur Störbefreiung von binären Datensignalen gemäß dem Oberbegriff des Patentanspruches 1.

Es ist eine Vielzahl von digitalen Übertragungssystemen für die unterschiedlichsten Anwendungsbereiche bekannt, bei denen die Daten in Form von binären Signalen unter Zugrundelegung einer oder mehrere fest vorgegebener nominaler Bittaktfrequenzen übertragen werden. Durch die unterschiedlichsten Ursachen hervorgerufen, können auf dem Übertragungsweg Störungen auftreten, bei denen sich hochfrequente Störanteile den übertragenen Datensignalen überlagern.

Ein Beispiel für ein solches digitales Übertragungssystem stellt z. B. eine datenverarbeitende Anlage mit digital arbeitenden Magnetbandgeräten als peripheren Speichern dar. In diesem Anwendungsfall sind Störungen darauf zurückzuführen, daß z. B. verschmutztes oder verschlissenes Bandmaterial, verschmutzte oder abgenutzte Köpfe zum Aufzeichnen verwendet werden. Das typische Störungsbild bei Lesesignalen von Magnetbandspeichern beruht auf einem Einbrechen der Lesesignalamplitude im Bereich eines Flankenwechsels, so daß dann Mehrfachflanken anstelle einer einzigen Flanke auftreten. Bei solchen Geräten wird zudem noch mit einer hohen Aufzeichnungsdichte gearbeitet, und bei der dann erforderlichen hohen Auflösung des Systemes bestehend aus Magnetkopf und Magnetschicht können auch kurze Störimpulse im digitalisierten Lesesignal zwischen weiter entfernten Impulsflanken auftreten.

Grundsätzlich besteht die Möglichkeit, solche hochfrequenten Störungen durch Maßnahmen zu beseitigen, die entweder im Frequenzbereich oder im Zeitbereich wirksam werden. Zu der erstgenannten Form der Störbeseitigung sind all diejenigen bekannten Maßnahmen zu zählen, bei denen die mehr oder minder verschliffenen Flanken der Datensignale mit Hilfe von passiven Filtern und Impulsformernetzwerken in möglichst ausgeprägte Rechteckimpulse umgesetzt werden. Der Verwendung von passiven Filtern sind jedoch Grenzen gesetzt, denn dabei unvermeidbare Verzerrungen sind insbesondere auch in dem obengenannten Anwendungsfall besonders unangenehm, da hier neben den Datensignalen zusätzlich kein Takt übertragen wird, sondern dieser erst aus den Datensignalen zurückgewonnen werden muß. Besonders kritisch ist hierbei, daß die nominale Periode für eine Bitzelle wegen einer noch zulässigen Abweichung der momentanen Bandgeschwindigkeit von dem Nominalwert ebenfalls schwanken kann.

Deshalb wird es häufig vorgezogen, die Störungsbeseitigung durch Maßnahmen im Zeitbereich durchzuführen. Bei den dazu bekannten Einrichtungen wird davon ausgegangen, daß Störsignalanteile gegenüber den Nutzsignalen nur sehr kurzfristig sind, man diskriminiert also Störsignale von Nutzsignalen aufgrund wesentlich kürzerer Impulsdauer der Störanteile. Mit anderen Worten, es wird ein festgestellter Flankenwechsel nur dann als ein Flankenwechsel im Nutzsignal interpretiert, wenn die Polarität im binären Signal auch nach Ablauf eines vorbestimmten kurzen Zeitraumes erhalten bleibt, wobei dieser Zeitraum etwas größer gewählt ist als die Dauer des längstmöglichen Störsignals.

Zur Verwirklichung dieses Prinzips werden die gestörten binären Datensignale bei einer aus der JP-A 34/7852 bekannten Einrichtung einer als Impulsformer wirkenden bistabilen Kippschaltung zugeführt und dort in Signale mit normaler und invertierter Polarität umgesetzt. Jeder der so erhaltenen Impulszüge wird dann in einem eigenen Schaltungszweig parallel weiterverarbeitet. In jedem Schaltungszweig ist ein Integrator vorgesehen, der durch einen positiven Flankenwechsel ausgelöst, den anschließenden Impuls bis zum Auftreten der nachfolgenden negativen Flanke aufintegriert. Wird dabei ein vorgegebener Schwellenwert überschritten, gibt der Integrator einem Ausgangsimpuls entsprechender Breite ab, der dann z. B. differenziert werden kann. Die erhaltenen differenzierten Signale beider Schaltungszweige werden jeweils den Setz- bzw. den Rücksetzeingängen einer weiteren bistabilen Kippstufe zugeführt, die am Ausgang die störbereinigten binären Datensignale abgibt.

Offensichtlich ist diese bekannte Schaltungsanordnung durchaus in der Lage, zwischen weiter entfernten tatsächlichen Flankenwechseln des binären Datensignals liegende Störungen, d.h. kurzzeitige Polaritätswechsel wirksam zu unterdrücken, wenn der das integrierte Datensignal bewertende Schwellenwert hoch genug vorgegeben ist, um eine für jede Störung mit Sicherheit ausreichende Signalverzögerung zu bewirken. Kritischer ist das Verhalten dieser Schaltungsanordnung jedoch im Hinblick auf Störungen des binären Datensignals, die im Bereich einer tatsächlichen Impulsflanke auftreten. Hier wird in jedem Fall erst die letzte dieser Mehrfachflanken als echte Flanke im binären Datensignal interpretiert, was zu erheblichen Verzerrungen und damit auch zu Schwierigkeiten bei der Rückgewinnung des nominalen Bittaktes führen kann.

Der vorliegenden Erfindung liegt daher die Aufgabe zugrunde, eine Schaltungsanordnung zur Störbefreiung von binären Datensignalen der eingangs erwähnten Art zu schaffen, die sowohl Störungen im Bereich eines Flankenwechsels des binären Datensignals als auch Störungen zwischen weiter entfernten Flanken eindeutig beseitigt, ohne daß dadurch die tatsächlichen Flankenwechsel im binären Datensignal zu stark verzögert, d. h. die Datensignale zu stark verzerrt werden.

Diese Aufgabe wird bei einer Schaltungsanordnung der eingangs genannten Art erfindungsgemäß durch die im Kennzeichen des Patentanspruches 1 beschriebenen Merkmale gelöst. Das gewünschte Ergebnis ist im wesentlichen mitbestimmt durch die Arbeitsweise der verwendeten Integrierglieder. Jedes Integrierglied wird nicht etwa nach jedem einzelnen kurzzeitigen Impuls einer vorgegebenen Polarität zurückgesetzt, sondern hält den mit der Rückflanke eines solchen Impulses erreichten Wert bis die nächste Vorderflanke des nächsten Impulses derselben Polarität auftritt und setzt dann die Integration fort. Dieser Integriervorgang wird solange

fortgesetzt, bis schließlich ein vorgegebener Schwellenwert erreicht ist.

Bei dieser Arbeitsweise konkurrieren beide Integrierglieder miteinander, denn in einem digitalen Übertragungssystem ist, systembedingt, jeweils nur eines der beiden Integrierglieder aktiviert, während das andere unverändert im momentanen Zustand gehalten wird. Bei einem Auftreten von Mehrfachflanken wird daher immer nur eines der beiden Integrierglieder zuerst einen Integrationswert erreichen, der dem vorbestimmten Schwellenwert entspricht. Zu diesem Zeitpunkt wird dies als das Auftreten einer Flanke im binären Datensignal interpretiert und beide Integrierglieder werden gemeinsam in ihren Ausgangszustand zurückgesetzt. Abhängig davon, in welchem der beiden Schaltungszweige der Schwellenwert erreicht wurde, wird die am Ausgang der Schaltung vorgesehene bistabile Schalteinrichtung über ihren Setz-bzw. Rücksetzeingang angesteuert. Nur dann, wenn die festgestellte Signalflanke eine echte Flanke des binären Datensignales darstellt, bewirkt diese Ansteuerung auch eine Umschaltung der Schalteinrichtung. Damit werden einerseits Mehrfachflanken, die im Zusammenhang mit einem echten Flankenwechsel im binären Datensignal auftreten, quasi zusammengeschoben, währen kurze Einbrüche im binären Datensignal zwischen den Impulsflanken völlig ausgefiltert werden.

Wenn man diese Schaltungsanordnung in rein digitaler Form ausbildet, wie in Unteransprüchen als Weiterbildungen der Erfindung beschrieben, dann läßt sich damit erreichen, daß die Schaltung unmittelbar nach jeder festgestellten Flanke, d. h. dem Rücksetzen der Integrierglieder, wieder in der Lage ist, erneute kurzzeitige Störungen zu bewerten. Selbst sehr kritische Störungen im Impulsverlauf der binären Datensignale lassen sich damit beherrschen und es ist auch möglich, die Schaltungsanordnung an die verschiedensten Anwendungsfälle flexibel anzupassen.

Bei digitalem Aufbau der Schaltung gilt dies nicht nur hinsichtlich der praktisch trägheitslosen Funktion der Integrierglieder, wegen des Wegfalls von Entladungszeitkonstanten, sondern auch für weitere Möglichkeiten, die entstörten binären Datensignale weiter aufzubereiten, wie z. B. die Richtung von Signalflanken zu erkennen und diese Information statisch zu halten bis eine erneute Richtungsumkehr stattfindet. Damit können für eine nachfolgende Rückgewinnung des Bittaktes aus dem Impulszug der binären Datensignale, falls erforderlich, alle Voraussetzungen geschaffen werden.

Ausführungsbeispiele der Erfindung werden im folgenden anhand der Zeichnung näher beschrieben. Dabei zeigt:

Fig. 1 Impulsdiagramme mit einem typischen Störungsbild für digitalisierte Lesesignale eines Magnetbandspeichers als einem Beispiel gestörter binärer Datensignale und in schematischer Form daraus abgeleitete Impulsdiagramme für entstörte binäre Datensignale,

Fig.2 ein Prinzipschaltbild für eine erfindungsgemäß ausgebildete Schaltungsanordnung zur Störbefreiung von solchen binären Datensignalen,

Fig. 3 eine Reihe von Impulsdiagrammen zur Erläuterung der Funktionsweise der anhand von Fig. 2 im Prinzip dargestellten Schaltungsanordnung und

Fig. 4 das Schaltbild für eine Ausführungsform des anhand von Fig. 2 gezeigten Schaltungskonzeptes.

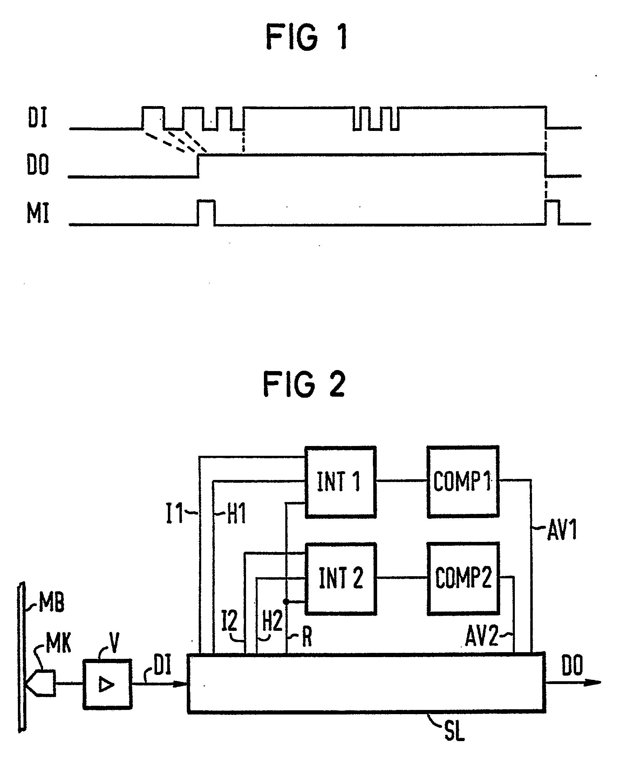

Zur Illustration der Problemstellung sind einleitend in Fig. 1 schematisch Impulsdiagramme gezeigt. In der ersten Zeile ist ein Ausschnitt aus dem Impulszug von gestörten binären Datensignalen DI dargestellt, der, bezogen auf den Anwenddungsfall bei Magnetbandgeräten, ein typisches Störungsbild für Lesedaten zeigt. Dabei können im Bereich eines Flankenwechsels, bedingt durch in das Lesesignal induzierte Störungen im digitalisierten Signal, Mehrfachflanken auftreten. Typisch ist weiterhin ein Einbruch im Datensignal zwischen den weiter entfernten Flanken. Die zweite Zeile von Fig. 1 zeigt das zügehörige, von den Störungen befreite originale binäre Datensignal, das mit Hilfe einer Schaltungsanordnung zur Störbeseitigung möglichst unverändert aus dem gestörten binären Datensignal DI wieder gewonnen werden soll. In der dritten Zeile schließlich sind von den Flanken des binären Datensignales ausgelöste Markierungsimpulse MI dargestellt, die aus dem störbereinigten Impulszug der binären Datensignale DO gewonnen werden und beispielsweise bei einer anschließenden, hier nicht zur Diskussion stehenden Rückgewinnung des momentanen Bittaktes Verwendung finden.

Fig. 1 illustriert damit die Problemstellung bei einer Schaltungsanordnung zur Störbeseitigung von binären Datensignalen: Es muß eine Möglichkeit geschaffen werden, solche Mehrfachflanken im Bereich eines Flankenswechsels des binären Datensignals quasi zusammenzuschieben, um mit möglichst guter Annäherung die originale Flanke zurückzugewinnen und weiterhin müssen Einbrüche im Datensignal zwischen Flankenwechseln vollständig weggefiltert werden.

Das Blockschaltbild für eine Schaltungsanordnung, mit der diese Aufgabe gelöst wird, ist in Fig. 2 dargestellt. Bei dieser Schaltungsanordnung werden Daten von einer Magnetschicht, beispielsweise von einem Magnetband MB unter Verwendung eines Magnetkopfes MK gelesen. Die gelesenen Signale enthalten codiert die eigeliche Dateninformation und werden in einem Verstärker V verstärkt, gegebenenfalls begrenzt und schließlich digitalisiert. Der Lesevorgang und diese Signalaufbereitung wird in jedem Magnetbandgerät durchgeführt und kann auch hier mit rein kommerziellen Mitteln ausgeführt werden. Eine nähere Beschreibung von Einzelheiten erübrigt sich daher.

Die Ausgangssignale des Verstärkers V mögen die gestörten binären Datensignale DI sein, die der Schaltungsanordnung zur Störbeseitigung zugeführt werden. Diese Schaltungsanordnung enthält neben einer schematisch dargestellten Steuerlogik SL zwei Integrierglieder INT1 bzw. INT2 und zwei, jeweils an eines der Integrierglieder angeschlossene Vergleicher COMP1 bzw. COMP2. Die Integrierglieder haben, wie durch entsprechende Eingangsleitungen angedeutet, drei Betriebsarten: "Integrieren", ausgelöst durch Signale auf den ersten Eingangsleitungen I1, I2, "Halten", gesteuert durch Signale auf den zweiten Eingangsleitungen H1, H2 und "Rücksetzen", ausgelöst durch ein Signal auf der mit R bezeichneten dritten Eingangsleitung. Die beiden Vergleicher COMP1, COMP2 geben an Ausgangsleitungen AV1 bzw. AV2 je ein Ausgangssignal ab. Diese werden der Steuerlogik SL zugeführt und dort verarbeitet, um daraus den den störbeseitigten binären Datensignalen DO entsprechenden Ausgangssignale z. B. Markierungsimpulse MI zu erzeugen.

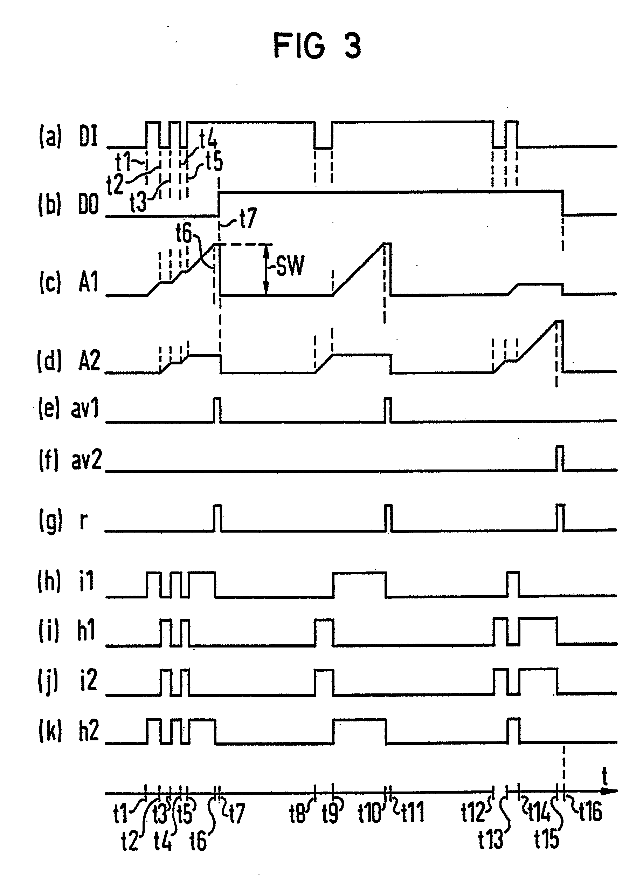

Zum besseren Verständnis der Erfindung erscheint es zunächst sinnvoll, die Funktion dieser anhand von Fig. 2 im Prinzip dargestellten Schaltungsanordnung zu erläutern und dann erst anhand einer Ausführungsform Einzelheiten des Schaltungsaufbaues zu beschreiben. Die Erläuterung dieser Funktion geschieht anhand der in Fig. 3 dargestellten Impulsdiagramme, bei denen allerdings aus Gründen der besseren Übersicht in der Praxis auftretende Laufzeitverzögerungen nicht berücksichtigt sind. Um für die Signalbezeichnungen den Zusammenhang mit Fig. 2 herzustellen, ist Kleinschreibung gewählt, d. h. auf einer Leitung Y läuft ein Signal y.

In Zeile a) von Fig. 3 ist wieder ein Beispiel für einen Impulszug des gestörten binären Datensignales DI über der Zeit t dargestellt. In diesem Impulszug ändert sich zu einem Zeitpunkt t1 das gestörte Signal. Mit diesem Flankenwechsel nimmt ein Integriersignal i1 den Zustand "1" an, wie in Zeile h) von Fig. 3 dargestellt und akitiviert das erste Integriertglied INT1. In Zeile c) von Fig. 3 ist dazu ein gespeicherter Wert A1 für das erste Integrierglied INT1 angegeben.

Zum Zeitpunkt t2 ändert sich wieder die Polarität im gestörten binären Datensignal DI, damit wird das erste Integriersignal i1 in den Zustand "0" zurückgesetzt. Zugleich wird das erste Integrierglied INT1 mit Hilfe eines ersten Haltesignales h1 (Fig. 3, Zeile i)) in die Betriebsart "Halten" gesetzt, in der sein Speicherwert A1 nicht ändert. Zum selben Zeitpunkt empfängt das zweite Integrierglied INT2 das zweite Integriersignal i2 (Fig. 3, Zeile j)). Die Betriebsart "Integrieren" für das zweite Integrierglied INT2 ist entsprechend aus Zeile d) von Fig. 3 zu entnehmen, in der sein momentaner Speicherwert A2 dargestellt ist.

Zum Zeitpunkt t3, d. h. mit der nächsten positiven Flanke im binären Datensignal DI kehrt sich der Zustand der Integrierglieder INT1 bzw. INT2 wieder um. Das zweite Integriersignal i2 geht auf "0" zurück, stattdessen wird ein zweites Haltesignal h2 (Fig. 3, Zeile k)) für dieses Integrierglied in den Zustand "1" gesetzt. Das zweite Integrierglied INT2 ist damit in der Betriebsart "Halten", das erste Integrierglied INT1 kehrt in die Betriebsart "Integrieren" zurück.

Diese beschriebene alternierende Betriebsweise der beiden Integrierglieder INT1 und INT2 setzt sich in analoger Weise auch bei den Zeitpunkten t4 bzw. t5 fort, die wiederum kurzzeitige Flankenwechsel im gestörten binären Datensignal DI kennzeichnen.

Ersichtlich konkurrieren beide Integrierglieder INT1, INT2 im Bereich dieser kurzzeitigen Mehrfachflanken miteinander und halten mit der Zeit einen immer höheren Speicherwert A1 bzw. A2. Im dargestellten Beispiel erreicht das erste Integrierglied INT1 zu einem Zeitpunkt t6 einen Speicherwert A1, der identisch mit einem fest eingestellten Schwellenwert SW im zugeordneten ersten Vergleicher COMP1 ist. Dieser meldet daraufhin der Steuerlogik SL das Erreichen dieses Zustandes mit seinem Ausgangssignal av1, das in Zeile e) von Fig. 3 dargestellt ist.

Die Steuerlogik SL leitet aus diesem Ausgangssignal des Vergleichers COMP1 ein Rücksetzsignal r (Zeile g) von Fig. 3) ab und setzt damit beide Integrierglieder INT1 und INT2 zurück. Zugleich wird das Ausgangssignal av1 des ersten Vergleichers COMP1 in der Steuerlogik SL als Erreichen einer Flanke im binären Datensignal interpretiert. Für das störbereinigte binäre Datensignal bedeutet dies einen Polaritätswechsel, wie in Zeile b) von Fig. 3 gezeigt ist. Zu diesem Zeitpunkt t7 sind nun beide Integrierglieder wieder in der Lage eine neue Störung im binären Datensignal DI zu bewerten.

Ein solcher Einbruch im binären Datensignal DI tritt zum Zeitpunkt t8 auf und dauert bis zum Zeitpunkt t9. Analog zu dem oben beschriebenen Verhalten der Integrierglieder INT1, INT2 beginnt nun zünachst das zweite Integrierglied INT2 zu integrieren und wird zum Zeitpunkt t9 in die Betriebsart "Halten" gesetzt. Mit der Störungsrückflanke beginnt stattdessen das erste Integrierglied INT1 zu integrieren und erreicht zum Zeitpunkt t10 wiederum den Schwellenwert SW. Das entsprechende Ausgangssignal av1 des ersten Vergleichers COMP1 löst wiederum die bereits beschriebenen Funktionen in der Steuerlogik SL aus, der kurzzeitige Einbruch im binären Datensignal DI wird als Störung interpretiert, da nach dem Abklingen dieser Störung kein Polaritätswechsel im binären Datensignal DI aufgetreten ist. Dementsprechend ändert sich auch nicht der Zustand des in Zeile b) dargestellten störbereinigten binären Datensignals DO.

Zu den Zeitpunkten t12 bis t14 treten wiederum Mehrfachflanken im gestörten binären Datensignal DI auf. Diese werden analog zu den oben beschriebenen Vorgängen wieder von den Integriergliedern INT1 und INT2 ausgewertet. Diesmal erreicht das zweite Integrierglied INT2 zuerst den fest eingestellten Schwellenwert SW. Dementsprechend gibt der zweite Vergleicher COMP2 ein Ausgangssignal av2 an die Steuerlogik SL ab. Diese setzt wiederum beide Integrierglieder INT1, INT2 zurück und interpretiert das Ausgangssignal av2 des zweiten Vergleichers COMP2 als einen Polaritätswechsel im binären Datensignal, wie in Zeile b) von Fig. 3 gezeigt ist.

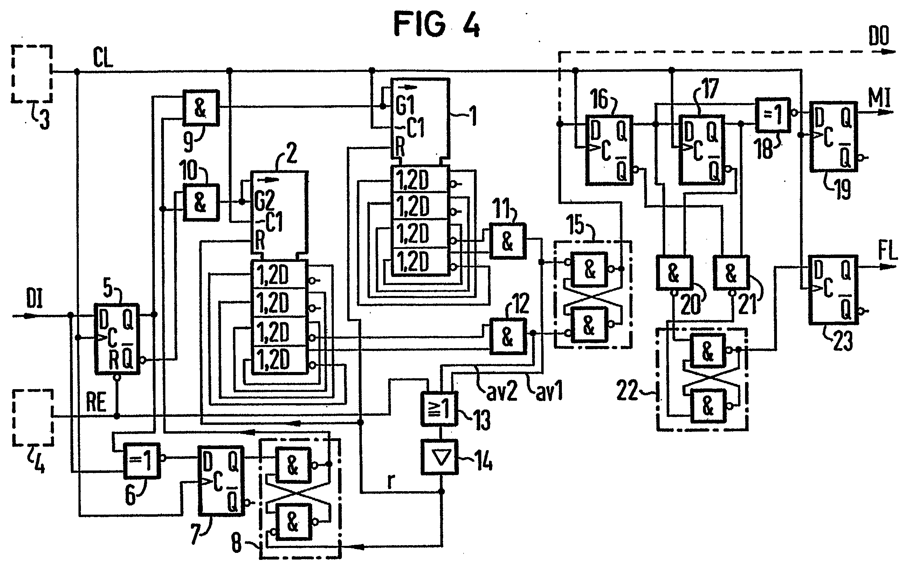

In Fig. 4 ist nun ein Ausführungsbeispiel für die in Fig. 2 im Prinzip dargestellte Schaltungsanordnung gezeigt. Dabei ist durch je einen ersten bzw. zweiten Binärzähler 1 bzw. 2 gemeinsam die Funktion eines der Integrierglieder INT1 bzw. INT2 mit dem daran angeschlossenen Vergleicher COMP1 bzw. COMP2 realisiert. Die übrigen in Fig. 4 dargestellten Schaltungselemente sind im wesentlichen alle der Steuerlogik SL zuzurechnen.

Die Schaltungsanordnung empfängt als ein externes Steuersignal ein Taktsignal CLOCK von einem externen, hier nur schematisch dargestellten Taktgeber 3. Dieses Taktsignal, im vorliegenden vereinfacht mit CL bezeichnet, besitzt eine Frequenz, die einem Vielfachen des nominalen Bittaktes der binären Datensignale DI entspricht. Es ist eine Frage der Schaltungstechnik und auch des gegebenen Anwendungsfalles wie hoch diese Frequenz im Verhältnis zu dem nominalen Bittakt der binären Datensignale tatsächlich gewählt wird. Denn diese Frequenz bestimmt, wie noch zu erkennen sein wird, im Zusammenwirken mit anderen Maßnahmen die Dynamik der Schaltungsanordnung. Weiterhin ist in Fig. 4 angedeutet, daß ein weiteres externes Steuersignal von einer schematisch angedeuteten Steuereinrichtung 4 zugeführt wird. Dieses Steuersignal ist ein generelles Rücksetzsignal RESET und wird im folgenden mit RE bezeichnet.

Die gestörten binären Datensignale DI werden dem Dateneingang einer ersten bistabilen Kippschaltung 5 zugeführt, die durch das Taktsignal CL getriggert wird. Der Dateneingang D und einer der Ausgänge dieser Kippschaltung sind jeweils an entsprechende Eingänge eines Exklusiv-ODER-Gliedes 6 angeschlossen, das damit immer jeweils dann ein Ausgangssignal abgibt, wenn die Zustände am Dateneingang bzw. Datenausgang der ersten bistabilen Kippschaltung 5 nicht identisch sind, d. h. innerhalb einer Taktperiode des Taktsignales CL ein Flankenwechsel im binären Datensignal DI aufgetreten ist.

Dieser Zustandswechsel wird mit Hilfe einer zweiten bistabilen Kippschaltung 7 in das Taktraster der Schaltungsanordnung einsynchronisiert. Das Ausgangssignal dieser zweiten bistabilen Kippschaltung 7 wird einer ersten RS-Kippstufe 8 zugeführt, die damit gesetzt wird. Diese RS-Kippschaltung kann je nach der verwendeten Schaltungstechnik beliebig aufgebaut werden und ist hier mit Hilfe von zwei NAND-Gliedern realisiert. Das statische Ausgangssignal der ersten RS-Kippstufe 8 ist im Zustand "1" ein Freigabesignal für die beiden Binärzähler 1,2. Es wird nämlich parallel zwei UND-Gliedern 9 bzw. 10 zugeführt, die an ihren zweiten Eingängen je eines der zueinander inversen Ausgangssignale der ersten bistabilen Kippschaltung 5 empfangen. Diese Ausgangssignale der ersten bistabilen Kippschaltung 5 entsprechen in ihrem einen Zustand "1" den Integriersignalen i1 bzw. i2 und in ihrem dazu inversen Zustand "0" den Haltesignalen h1. bzw. h2.

Die beiden Binärzähler 1 bzw. 2 sind, wie in Fig. 4 schematisch dargestellt, in bekannter Weise als synchrone Dualzähler mit einem vorgegebenen maximalen Zählerstand aufgebaut. So können die beiden Binärzähler 1,2 als vierstufige Johnson-Zähler realisiert sein, bei denen eine an den Dateneingängen anliegende "1" unter Steuerung des Taktsignales CL durch die einzelnen Stufen hindurchgeschoben wird und als Übertrag invertiert zum Eingang zurückgeführt wird. Bei diesem Schaltungsaufbau steht nach dem siebten Zählimpuls am Ausgang der vierten Stufe des Zählers eine binäre "1" und am Ausgang der dritten Stufe eine binäre "0". Im gegebenen Anwendungsfall ist dies der maximale Zählerstand, der dann eines der diesen Binärzählern 1 bzw. 2 nachgeschalteten weiteren UND-Glieder 11 bzw. 12 durchschaltet.

Kurz zusammengefaßt, es wird also ein erster Flankenwechsel im zugeführten gestörten binären Datensignal DI durch das Exklusiv-ODER-Glied 6 erkannt, damit die erste RS-Kippstufe 8 gesetzt, so daß die Ausgangssignale der ersten bistabilen Kippschaltung 5 auf den ersten und zweiten Binärzähler 1 bzw. 2 durchgeschaltet werden. Solange am Binärzähler 1 bzw. 2 zum Zeitpunkt der triggernden Taktflanke des Taktsignales CL eine binäre "1" anliegt, wird dieser Zähler, z. B. der erste Binärzähler 1 um einen Zählwert erhört. Da zum selben Zeitpunkt am zweiten Binärzähler 2 der dazu inverse Zustand vorliegen muß, bleibt der Zählwert dieses Zählers unverändert. Dies setzt sich, ausgelöst durch die zugeführten binären Datensignale DI, wie eingangs im einzelnen beschrieben, solange fort, bis bei einem der Binärzähler 1 bzw. 2 der maximale Zählerstand erreicht ist und das zugeordnete UND-Glied 11 bzw. 12 durchschaltet. Die Ausgangssignale dieser UND-Glieder entsprechen den Ausgangssignalen av1 bzw. av2, die in den noch weiter zu beschreibenden Teilen der Steuerlogik SL ausgewertet werden.

Diese Signalauswertung betrifft zum einem das Erzeugen des Rücksetzsignales r. Dazu sind die Ausgänge der beiden UND-Glieder 11 und 12 mit Eingängen eines ODER-Gliedes 13 verbunden, dem außerdem das von der Steuereinrichtung 4 abgegebene allgemeine Rücksetzsignal RE zugeführt ist. Am Ausgang des ODER-Gliedes 13 ist ein Signalverstärker 14 angeschlossen, dessen Ausgang seinerseits parallel mit Rücksetzeingängen der beiden Binärzähler 1 und 2 sowie einem Rücksetzeingang der ersten RS-Kippstufe 8 verbunden ist. Der Signalverstärker 14 gibt also immer dann ein das Rücksetzen der beiden Binärzähler 1 und 2 und der ersten RS-Kippstufe 8 auslösendes Steuersignal ab, wenn einer der beiden Binärzähler 1 bzw. 2 den vorgegebenen maximalen Zählerstand erreicht oder das extern erzeugte Rücksetzsignal RE zugeführt wird. Im letzteren Fall wird die gesamte Schaltungsanordnung in einen definierten Ausgangszustand gebracht, in dem zusätzlich auch die erste bistabile Kippschaltung 5 zurückgesetzt wird. Ein nach dem Rücksetzen der beiden Binärzähler 1, 2 auftretender erneuter Flankenwechsel des binären Datensignales DI wird unmittelbar durch das erste Exklusiv-ODER-Glied 6 festgestellt und der oben beschriebene Ablauf erneut in Gang gesetzt.

In der Steuerlogik werden die Ausgangssignale av1, av2 der beiden UND-Glieder 11 und 12 noch in einer anderen Form ausgewertet. Dazu sind die beiden UND-Schaltungen 11, 12 jeweils mit dem Setzbzw. dem Rücksetzeingang einer zweiten, aus NAND-Gliedern aufgebauten RS-Kippstufe 15 verbunden. Dieses Schaltungsdetail macht nun deutlich, was passiert, wenn wie in Fig. 3 dargestellt, zwischen den Zeitpunkten t8 und t9 ein Störeinbruch im binären Datensignal auftritt, der vollständig ausgefiltert wird. Der zweite Binärzähler 2 beginnt zwar zum Zeitpunkt t8 zu zählen, erreicht jedoch im Gegensatz zum ersten Binärzähler 1 nicht den vorgegebenen Schwellenwert. Zum Zeitpunkt t10 ist der maximale Zählerstand im ersten Binärzähler erreicht und es wird erneut ein Setzimpuls auf die vorher bereits gesetzte zweite RS-Kippstufe gegeben.

Der umgekehrte Fall liegt vor, wenn man wiederum in Fig. 3 den zum Zeitpunkt t15 auftretenden Zustand betrachtet. Zu diesem Zeitpunkt erreicht der zweite Binärzähler 2 seinen maximalen Zählerstand vor dem ersten Binärzähler 1, so daß das UND-Glied 12 durchschaltet und am Rücksetzeingang der zweiten RS-Kippstufe 15 eine "1" ansteht. Die Kippstufe wird damit zurückgesetzt und an ihrem Ausgang tritt ein Polaritätswechsel auf. Der Ausgang der zweiten Kippstufe 15 liefert also ein Signal, das dem bereinigten binären Datensignal DO entspricht.

Die weiteren in der Steuerlogik SL enthaltenen Schaltungselemente können dazu dienen, anstelle der störbereinigten binären Datensignale DO Datensignale abzuleiten, die an sich dieselbe Information, jedoch in einer Form beinhalten, die einer weiteren Verarbeitung der binären Datensignale zum Beispiel bei der Rückgewinnung des momentanen Bittaktes besser angepaßt sind. Dazu sind zwei weitere, durch das Taktsignal CL getriggerte bistabile Kippschaltungen 16 bzw. 17 in Serienschaltung am Ausgang der zweiten RS-Kippstufe 15 angeordnet. Beide normalen Ausgänge dieser dritten und vierten bistabilen Kippschaltung 16 bzw. 17 sind mit Eingängen eines zweiten Exklusiv-ODER-Gliedes 18 verbunden. So wird ein Flankenwechsel im bereinigten binären Datensignal festgestellt. Ein entsprechendes Ausgangssignal wird einer fünften bistabilen Kippschaltung 19 zugeführt, die daraufhin, gesteuert durch das Taktsignal CL, einen Markierimpuls MI abgibt, wie, ohne die Signalverzögerung zu beachten, in Fig. 1 dargestellt ist.

Außerdem sind jeweils die beiden Ausgänge der dritten bistabilen Kippschaltung 16 und die dazu inversen Ausgänge der vierten bistabilen Kippschaltung 17 paarweise über zwei NAND-Glieder 20 bzw. 21 mit dem Setz- bzw. Rücksetzeingang einer dritten RS-Kippstufe 22 verbunden. Diese dritte RS-Kippstufe 22 wird also immer dann gesetzt, wenn die an das NAND-Glied 20 angeschlossenen Ausgänge der dritten und vierten bistabilen Kippschaltung 16 bzw. 17 beide einen Signalzustand "1" aufweisen. Dieser Zustand entspricht einem positiven Flankenwechsel des störbereinigten binären Datensignals DO. Analoges gilt für das Rücksetzen der dritten RS-Kippstufe 22. Der Zustand dieser RS-Kippstufe gibt daher eine Information über die Richtung des bisher letzten Flankenwechsels im bereinigten binären Datensignal. Um das Ausgangssignal dieser bistabilen Kippschaltung mit dem Markierimpuls MI zu synchronisieren, ist schließlich eine durch das Taktsignal CL getriggerte sechste bistabile Kippschaltung 23 vorgesehen, deren Dateneingang an den Ausgang der dritten RS-Kippstufe 22 angeschlossen ist. Am Ausgang der Kippschaltung 23 wird daher synchron zu dem Markierimpuls MI ein statisches Flankensignal FL abgegeben, dessen Signalzustand die Richtung der zuletzt aufgetretenen Flanke im binären Datensignal anzeigt.

Damit ist deutlich, daß der Markierimpuls MI in Verbindung mit dem Flankensignal FL in anderer Form dieselbe Information vermittelt wie das am Ausgang der zweiten RS-Kippstufe 15 erzeugte bereinigte Datensignal DO, jedoch den Vorteil hat, daß die Information über die Richtung der zuletzt aufgetretenen Flanke bis zum nächsten Flankenwechsel erhalten bleibt. Die obige Beschreibung macht auch deutlich, daß die Verwendung der bistabilen Kippschaltungen 16, 17 und 19, 23 im wesentlichen dem Zweck dient, die auftretenden Signale in ein Taktraster einzufangen und zueinander zu synchronisieren.

In diesem Zusammenhang ist auch die Bedeutung der Taktperiode des Taktsignales CL im Verhältnis zu dem momentanen Bittakt des binären Datensignales deutlich. Je größer das Verhältnis dieser beiden Takte zueinander ist, um so schärfer ist die Bewertung relativ zueinander liegender Flanken im gestörten binären Datensignal. Allerdings ist es nicht erforderlich, diese Dynamik der Schaltungsanordnung bis zu einer durch moderne Schaltkreistechnik möglichen oberen Grenze auszunutzen, da eine gewisse Begrenzung in der Dynamik der beschriebenen Schaltungsanordnung von vornherein sehr hochfrequente Störanteile unterdrückt und andere Ursachen für eine Phasenverzerrung im binären Datensignal vorliegen können, die bekanntlich z. B. bei den Lesesignalen von Magnetbandgeräten erst durch eine weitere hier nicht relevante Signalverarbeitung mit Hilfe von Regelkreisen eliminiert werden können.

## Patentansprüche

1. Schaltungsanordnung zur Störbefreiung von binären Datensignalen in einem digitalen Übertragungssystem unter Verwendung zweier, jeweils einer der Polaritäten der Datensignale zugeordneter Schaltungszweige mit je einem Integrierglied und einem Komparator zum Vergleichen des Momentanwertes am zugeordneten Integrierglied mit einem vorgegebenen Schwellenwert und unter Verwendung einer Steuereinrichtung, die aus Ausgangssignalen der Komparatoren störbefreite binäre Datensignale ableitet, **dadurch gekennzeichnet**, daß die Integrierglieder (INT1, INT2 bzw. 1, 2) jeweils derart ausgebildet sind. daß sie, jeweils durch einen Flankenwechsel der gestörten binären Datensignale (DI) in die zugeordnete eine bzw. andere Signalpolarität ausgelöst, ungeachtet nachfolgender Flankenwechsel, die Signalanteile mit der zugeordneten Polarität erfassen, bis der vorgegebene Schwellenwert (SW) erreicht ist und daraufhin der nachgeschaltete Komparator (COMP1 bzw. COMP2) ein entsprechendes Ausgangssignal (av1 bzw. av2) abgibt und daß in der Steuereinrichtung (SL) durch jedes Komparatorausgangssignal ausgelöste Schaltmittel (13, 14) zum gemeinsamen Rücksetzen beider Integrierglieder in einen Ausgangszustand und weiterhin eine bistabile Schalteinrichtung (15) vorgesehen sind, der die Komparatorausgangssignale als Setz- bzw. Rücksetzsignale zugeführt sind.

2. Schaltungsanordnung nach Anspruch 1, **dadurch gekennzeichnet**, daß das in jedem Schaltungszweig vorgesehene Integrierglied (INT1 bzw. INT2) gemeinsam mit dem zugeordneten Komparator (COMP1 bzw. COMP2) als Binärzähler (1 bzw. 2) mit einem vorgegebenen maximalen Zählerstand ausgebildet ist.

3. Schaltungsanordnung nach Anspruch 2, **dadurch gekennzeichnet**, daß die Binärzähler (1, 2) als synchrone Dualzähler mit interner Rückführung eines Übertragsignales ausgebildet sind, zum Bilden des Komparatorausgangssignales (av1 bzw. av2) ein erstes bzw. zweites UND-Glied (11, 12) vorgesehen ist und diese UND-Glieder jeweils an zwei beim vorgegebenen Zählerstand gemeinsam aktivierte Zählerausgänge des erstem bzw. zweiten Binärzählers angeschlossen sind.

4. Schaltungsanordnung nach einem der Ansprüche 2 oder 3, **dadurch gekennzeichnet**, daß in der Steuerschaltung (SL) eine gemeinsame Steuertaktleitung vorgesehen ist, die auch den Binärzählern (1, 2) zugeführten Steuertakt (CL) mit einer Taktperiode führt, die einem Vielfachen der nominalen Taktperiode der binären Datensignale entspricht.

5. Schaltungsanordnung nach Anspruch 4, **dadurch gekennzeichnet**, daß zum Feststellen einer Flanke des binären Datensignales (DI) in der Steuerschaltung (SL) eine durch den Steuertakt (CL) getriggerte erste bistabile Kippschaltung (5) vorgesehen ist, die am Dateneingang die binären Datensignale (DI) empfängt und daß weiterhin ein Antivalenzglied (6) mit seinen beiden Eingängen mit dem Dateneingang bzw. dem Datenausgang der bistabilen Kippschaltung verbunden ist.

6. Schaltungsanordnung nach Anspruch 5, **dadurch gekennzeichnet**, daß eine durch den Steuertakt (CL) getriggerte zweite bistabile Kippschaltung (7) mit ihrem Dateneingang an den Ausgang des Antivalenzgliedes (6) angeschlossen ist und an einem Ausgang ein Steuersignal zum Aktivieren der Binärzähler (1, 2) abgibt.

7. Schaltungsanordnung nach Anspruch 6, **dadurch gekennzeichnet**, daß in der Steuerschaltung (SL) weiterhin eine erste RC-Kippstufe (8) vorgesehen, die mit ihrem Setzeingang an den Ausgang der zweiten bistabilen Kippschaltung (7) angeschlossen ist.

8. Schaltungsanordnung nach Anspruch 7, **dadurch gekennzeichnet**, daß je einer der beiden Ausgänge der ersten bistabilen Kippschaltung (5) über jeweils ein drittes und viertes UND-Glied (9 bzw. 10) mit dem Dateneingang eines der Binärzähler (1 bzw. 2) verbunden ist und daß dem dritten und dem vierten UND-Glied gemeinsam über je einen weiteren Eingang das von der ersten RS-Kippstufe (8) statisch gehaltene Steuersignal zugeführt ist.

9. Schaltungsanordnung nach Anspruch 7 oder 8, **dadurch gekennzeichnet**, daß die Ausgänge des ersten und zweiten UND-Gliedes (11 bzw. 12) gemeinsam an ein logisches Schaltglied (13) mit ODER-Verknüpfung angeschlossen sind, dessen Ausgang ein Rücksetzsignal (r) für beide Binärzähler (1, 2) abgibt, sobald einer der beiden Zähler den vorgegebenen maximalen Zählerstand erreicht hat.

10. Schaltungsanordnung nach Anspruch 9, **dadurch gekennzeichnet**, daß dem logischen Schaltglied (13) eine Verstärkerstufe (14) nachgeschaltet ist.

11. Schaltungsanordnung nach Anspruch 9 oder 10, **dadurch gekennzeichnet**, daß das Rücksetzsignal (r) sowohl den Binärzählern (1, 2) als auch der ersten RS-Kippschaltung (8) zum Rücksetzen in den Ausgangszustand zugeführt ist.

12. Schaltungsanordnung nach einem der Ansprüche 2 bis 10, **dadurch gekennzeichnet**, daß in der Steuerschaltung (SL) den beiden Binärzählern (1, 2) eine als eine zweite RS-Kippstufe (15) ausgebildete Haltestufe zugeordnet ist, deren Setz- bzw. Rücksetzeingängen je eines der Komparatorausgangssignale (av1 bzw. av2) zugeführt ist.

13. Schaltungsanordnung nach Anspruch 12, **dadurch gekennzeichnet**, daß in der Steuerschaltung (SL) zwei weitere, durch den Steuertakt (CL) getriggerte bistabile Kippschaltungen (16 bzw. 17) vorgesehen sind, die, in Serie geschaltet, mit dem Ausgang der Haltestufe (15) verbunden sind und daß zwei weitere logische Glieder (20 bzw. 21) mit UND-Verknüpfung über ihre Eingänge jeweils mit zwei zueinander inversen Ausgängen dieser weiteren bistabilen Kippschaltungen (16, 17) zum Feststellen einer positiven bzw. negativen Flanke im bereinigten Datensignal (DO) verbunden sind.

14. Schaltungsanordnung nach Anspruch 13, **dadurch gekennzeichnet**, daß eine dritte RS-Kippstufe (22) vorgesehen ist, deren Setz- bzw. Rücksetzeingänge jeweils mit dem Ausgang eines dieser weiteren logischen Glieder (20 bzw. 21) verbunden sind, wobei am Ausgang dieser dritten RS-Kippschaltung ein einer bestimmten Richtung des Flankenwechsels entsprechendes Signal statisch gehalten wird, bis die nächste Signalflanke festgestellt wird.

15. Schaltungsanordnung nach Anspruch 14, **dadurch gekennzeichnet**, daß ein weiteres Antivalenzglied (18) vorgesehen ist, dessen Eingänge an einander entsprechende Ausgänge der der Haltestufe (15) nachgeschalteten weiteren bistabilen Kippschaltungen (16 bzw. 17) angeschlossen sind, wobei ein dynamischer Markierimpuls abgegeben wird, sobald im bereinigten Datensignal (DO) eine Signalflanke auftritt.

16. Schaltungsanordnung nach Anspruch 15, **gekennzeichnet durch** zwei weitere, vom Steuertakt (CL) getriggerte bistabile Kippschaltungen (19 bzw. 23), deren Dateneingänge jeweils an den Ausgang des weiteren Antivalenzgliedes (18) bzw. der dritten RS-Kippstufe (22) angeschlossen sind, so daß das Flankensignal (FL) und der Markierimpuls (MI) zeitlich synchronisiert auftreten.

## Claims

1. Circuit arrangement for noise elimination in binary data signals in a digital transmission system, making use of two circuit branches which are each associated with one of the polarities of the data signals and which each have an integrating element and a comparator for comparing the instantaneous value at the associated integrating element with a predetermined threshold value, and making use of a control device which derives noise-free binary data signals from output signals of the comparators, characterized in that the integrating elements (INT1, INT2 and 1, 2) in each case are designed in such a manner that they, triggered in each case by an edge change of the noisy binary data signals (DI) to the associated one or other signal polarity, regardless of subsequent edge changes, register the signal portions with the associated polarity until the predetermined threshold value (Sw) is reached and thereupon the downstream comparator (COMP1 or COMP2) outputs a corresponding output signal (av1 or av2), and in that there are provided in the control device (SL) switching means (13, 14) triggered by each comparator output signal for jointly resetting both integrating elements to an initial state, and furhermore a bistable switching device (15), to which the comparator output signals are supplied as set or reset signals.

2. Circuit arrangement according to Claim 1, characterized in that the integrating element (INT1 or INT2) provided in each circuit branch is designed together with the associated comparator (COMP1 or COMP2) as a binary counter (1 or 2) with a predetermined maximum counter status.

3. Circuit arrangement according to Claim 2, characterized in that the binary counters (1, 2) are designed as synchronous binary counters with internal feedback of a transmission signal, a first or second AND element (11, 12) is provided for forming the comparator output signal (av1 or av2), and these AND elements are connected in each case to two counter outputs of the first or second binary counter, which outputs are activated jointly at the predetermined counter status.

4. Circuit arrangement according to one of Claims 2 or 3, characterized in that there is provided in the control circuit (SL) a common control clock line which carries a control clock signal (CL), also supplied to the binary counters (1, 2), with a clock period corresponding to a multiple of the nominal clock period of the binary data signals.

5. Circuit arrangement according to Claim 4, characterized in that, for detecting an edge of the binary data signal (DI) in the control circuit (SL), a first bistable flipflop (5) triggered by the control clock signal (CL) is provided which receives the binary data signals (DI) at the data input, and in that furthermore an exclusive OR element (6) is connected with its two inputs to the data input and the data output, respectively, of the bistable flipflop.

6. Circuit arrangement according to Claim 5, characterized in that a second bistable flipflop (7) triggered by the control clock signal (CL) is connected with its data input to the output of the exclusive OR element (6) and outputs at one output a control signal for activating the binary counter (1, 2).

7. Circuit arrangement according to Claim 6, characterized in that there is further provided in the control circuit (SL) a first RS bistable element (8) which is connected with its set input to the output of the second bistable flipflop (7).

8. Circuit arrangement according to Claim 7, characterized in that in each case one of the two outputs of the first bistable flipflop (5) is connected via in each case a third and fourth AND element (9 and 10) to the data input of one of the binary counters (1 or 2), and in that the control signal held static by the first RS bistable element (8) is supplied to the third and to the fourth AND element jointly via in each case one further input.

9. Circuit arrangement according to Claim 7 or 8, characterized in that the outputs of the first and second AND element (11 and 12) are both connected to a logical switching element (13) with OR operation, the output of which outputs a reset signal (r) for both binary counters (1, 2) as soon as one of the two counters has reached the predetermined maximum counter status.

10. Circuit arrangement according to Claim 9, characterized in that an amplifier stage (14) is connected downstream of the logical switching element (13).

11. Circuit arrangement according to Claim 9 or 10, characterized in that the reset signal (r) is supplied both to the binary counters (1, 2) and to the first RS bistable circuit (8) for resetting to the initial state.

12. Circuit arrangement according to one of Claims 2 to 10, characterized in that in the control circuit (SL) there is associated with the two binary counters (1, 2) a holding stage designed as a second RS bistable element (15), the set and reset inputs of which are each supplied with one of the comparator output signals (av1 and av2, respectively).

13. Circuit arrangement according to Claim 12, characterized in that in the control circuit (SL) two further bistable flipflops (16 and 17) triggered by the control clock signal (CL) are provided which, connected in series, are connected to the output of the holding stage (15), and in that two further logical elements (20 and 21) with AND operation are connected via their inputs in each case with two mutually inverted outputs of these further bistable flipflops (16, 17) for detecting a positive or negative edge in the noise-free data signal (DO).

14. Circuit arrangement according to Claim 13, characterized in that a third RS bistable element (22) is provided, the set and reset inputs of which are in each case connected to the output of one of these further logical elements (20 and 21, respectively), a signal corresponding to a certain direction of the edge change being held statically at the output of this third RS bistable circuit until the next signal edge is determined.

15. Circuit arrangement according to Claim 14, characterized in that a further exclusive OR element (18) is provided, the inputs of which are connected to mutually corresponding outputs of the further bistable flipflops (16 and 17) connected downstream of the holding stage (15), a dynamic marking pulse being output as soon as a signal edge occure in the noise-free data signal (DO).

16. Circuit arrangement according to Claim 15, characterized by two further bistable flipflops (19 and 23) triggered by the control clock signal (CL), the data inputs of which are connected in each case to the output of the further exclusive OR element (18) and of the third RS bistable element (22) respectively, so that the edge signal (FL) and the marking pulse (MI) occur temporally synchronized.

## Revendications

1. Montage pour l'élimination des parasites de signaux de données binaires dans un système de transmission numérique, avec mise en œuvre de deux branches de circuit associées respectivement à l'une des polarités des signaux de données, avec respectivement un intégrateur et un comparateur pour la comparaison de la valeur instantanée au niveau de l'intégrateur associé avec une valeur de seuil prédéterminée, et mise en œuvre d'un dispositif de commande qui dérive des signaux de données binaires déparasités à partir des signaux de sortie des comparateurs, caractérisé en ce que les intégrateurs (INT1, INT2 respectivement 1, 2) sont chacun réalisés de telle façon qu'étant chacun déclenché par un changement de flanc du signal de données binaire parasité (DI) dans l'une ou l'autre de la polarité du signal associé, et sans tenir compte du changement de flanc qui suit, ils saisissent les parties du signal avec la polarité associée jusqu'à ce que la valeur de seuil prédéterminée (SW) soit atteinte alors qu'ensuite le comparateur aval (COMP1, COMP2) émet un signal de sortie correspondant (av1, av2), et que sont prévus dans le circuit de commande (SL) des moyens de commutation (13, 14) déclenchés par chaque signal de sortie du comparateur pour la remise commune à l'état initial des deux intégrateurs, ainsi qu'un circuit bistable (15), auquel sont appliquées les signaux de sortie des comparateurs en tant que signaux d'activation et de remise à l'état initial.

2. Montage selon la revendication 1, caractérisé en ce que l'intégrateur (INT1, INT2) prévu dans chaque branche de circuit est réalisé en commun avec le comparateur associé (COMP1, COMP2) sous forme de compteurs binaires (1, 2) avec un état de comptage maximal prédéterminé.

3. Montage selon la revendication 2, caractérisé en ce que les compteurs binaires (1, 2) sont réalisés sous forme de compteurs binaires synchrones avec réinjection interne d'un signal de report, en ce que pour la formation du signal de sortie du comparateur (av1, av2) est prévu un premier et un second circuits ET (11, 12) et en ce que ces circuits ET sont respectivement connectés à deux sorties de comptage activées en commun à la position de comptage prédéterminée du premier et du second compteur binaire.

4. Montage selon l'une des revendications 2 ou 3, caractérisé en ce qu'est prévu dans le circuit de commande (SL) un conducteur de cadence de commande commun, qui fournit une cadence de commande (CL) également appliquée au compteur binaire (1, 2) avec une période de cadence qui est un multiple de la période de cadence nominale des signaux de données binaires.

5. Montage selon la revendication 4, caractérisé en ce qe pour repérer un flanc du signal de données binaire (DI), il est prévu dans le circuit de commande (SL) une première bascule bistable (5) déclenchée à la cadence de commande (CL), et qui reçoit à l'entrée des données les signaux de donnée binaire (DI) et en ce que, en outre, un circuit OU-Exclusif (6) est relié par ses deux entrées à l'entrée des données respectivement, à la sortie des données de la bascule bistable.

6. Montage selon la revendication 5, caractérisé en ce qu'une seconde bascule bistable (7) déclenchée à la cadence de commande (CL) est reliée par son entrée de données à la sortie du circuit OU-Exclusif (6) et fournit à une sortie un signal de commande pour l'activation des compteurs binaires (1, 2).

7. Montage selon la revendication 6, caractérisé en ce que dans le circuit de commande (SL) est prévu, en outre, un premier étage à bascule RC (8) qui est relié par son entrée d'activation à la sortie de la deuxième bascule bistable (7).

8. Montage selon la revendication 7, caractérisé en ce que chacune des deux sorties de la première bascule bistable (5) est reliée, par l'intermédiaire d'un troisième et quatrième circuits ET (9, 10) à l'entrée des données d'un des compteurs binaires (1, 2) et en ce que le signal maintenu statiquement par le premier étage à la bascule RS (8) est transmis en commun aux troisième et quatrième circuits ET, respectivement, par l'intermédiaire d'une autre entrée.

9. Montage selon l'une des revendications 7 ou 8, caractérisé en ce que les sorties des premier et second circuits ET (11, 12) sont reliées en commun à un circuit logique (13) à combinaison OU, dont la sortie émet un signal de remise à l'état initial (r) pour les deux compteurs binaires (1, 2) aussitôt qu'un des deux compteurs a atteint l'état de comptage maximal prédéterminé.

10. Montage selon la revendication 9, caractérisé en ce qu'un étage amplificateur (14) est monté en aval du circuit logique (13).

11. Montage selon les revendications 9 ou 10, caractérisé en ce que le signal de remise à l'état initial (r) est appliqué aussi bien aux compteurs binaires (1, 2) qu'à la première bascule RC (8) pour la remise à l'état initial.

12. Montage selon l'une des revendications 2 à 10, caractérisé en ce que dans le circuit de commande SL est associé aux deux compteurs binaires (1, 2) un étage de maintien sous forme d'une seconde bascule RS (15) aux entrées d'activation et de remise à l'état initial de laquelle sont appliqués respectivement l'un des signaux de sortie (av1, av2) du comparateur.

13. Montage selon la revendication 12, caractérisé en ce qu'il est prévu dans le circuit de commande (SL) deux autres bascules bistables (16, 17) commandables par la cadence de commande CL, et qui, branchées en série, sont reliées à la sortie de l'étage de maintien (15) et en ce que deux autres circuits logiques (20, 21) à combinaison ET sont reliés par leurs entrées respectivement à deux sorties inversées l'une par rapport à l'autre de ces autres bascules bistables (16, 17) pour le repérage d'un flanc positif ou négatif dans le signal de données déparasité DO.

14. Montage selon la revendication 13, caractérisé en ce qu'il est prévu une troisième bascule RS (22) dont les entrées d'activation et de remise à l'état initial sont reliées respectivement à la sortie d'un de des autres circuits logiques (20, 21), tandis qu'à la sortie de cette troisième bascule RS est maintenu statique un signal correspondant à une direction déterminée du changement de flanc, jusqu'à ce que se présente le flanc de signal suivant.

15. Montage selon la revendication 14, caractérisé en ce qu'on prévoit un autre circuit OU-Exclusif (18) dont les entrées sont reliées aux sorties correspondantes des autres bascules bistables (16, 17) qui sont montées en aval de l'étage de maintien (15), tandis qu'est émise une impulsion de marquage dynamique aussitôt que se présente un flanc de signal dans le signal de donnée déparasité.

16. Montage selon la revendication 15, caractérisé par deux autres bascules bistables (19, 23) déclenchées par la cadence C1, et dont les entrées de données sont reliées respectivement à la sortie de l'autre circuit OU-Exclusif (18), ou au troisième étage de bascule RS (22), de sorte que le signal de flanc FL et l'impulsion de marquage (MI) se présentent synchronisés dans le temps.

# FIG 1

# FIG 2

# FIG 3

# FIG 4

EP 0 193 943 B1